# FASCICULE DE BREVET EUROPEEN

(11) **EP 1 266 364 B1**
(45) Date de publication et mention de la délivrance du brevet: **26.05.2004**
(21) Numéro de dépôt: 01917173.5
(22) Date de dépôt: 19.03.2001
(51) Int. Cl.: G07F 7/12, H04L 9/32

(54) **PROCEDE CRYPTOGRAPHIQUE DE PROTECTION CONTRE LA FRAUDE**
KRYPTOGRAFISCHES VERFAHREN ZUM SCHUTZ GEGEN BETRUG
CRYPTOGRAPHIC METHOD FOR PROTECTION AGAINST FRAUD

(30) Priorité: 22.03.2000 FR 0003684
(43) Date de publication de la demande: 18.12.2002
(73) Titulaire: FRANCE TELECOM, 75015 Paris (FR)
(72) Inventeur: GILBERT, Henri, F-91440 Bures sur Yvette (FR); GIRAULT, Marc, F-14000 Caen (FR)
(74) Mandataire: Jeune, Pascale
(86) Numéro de dépôt international: PCT/FR2001/000808
(87) Numéro de publication internationale: WO 2001/071675

(56) Documents cités:
- EP-A- 0 565 279
- EP-A- 0 621 570
- WO-A-97/22093
- DE-A- 4 138 861

## Description

### Domaine de l'invention

La présente invention se rapporte à un procédé cryptographique de protection contre la fraude d'une puce électronique.

L'invention trouve une application très avantageuse en ce qu'elle permet de protéger contre la fraude des puces à circuit intégré à logique câblée ou à microprocesseur, notamment les puces qui équipent les cartes prépayées utilisées dans des transactions diverses telles que l'établissement de communications téléphoniques, le paiement d'objets dans un distributeur automatique, la location d'emplacements de stationnement à partir d'un parcmètre, le paiement d'un service comme un transport public ou comme la mise à disposition d'infrastructures (péage, musée, bibliothèque,...).

### Description de l'art antérieur

Actuellement, les cartes prépayées sont susceptibles de subir différents types de fraude. Un premier type de fraude consiste à dupliquer sans autorisation la carte, le terme clonage étant souvent utilisé pour caractériser cette opération. Un deuxième type de fraude consiste à modifier les données attachées à une carte, en particulier le montant du crédit inscrit dans la carte. Pour lutter contre ces fraudes il est fait appel à la cryptographie, d'une part pour assurer l'authentification de la carte au moyen d'une authentification et/ou pour assurer l'authentification des données au moyen d'une signature numérique et, d'autre part pour assurer le cas échéant la confidentialité des données au moyen d'un chiffrement. La cryptographie met en jeu deux entités, un vérificateur et un objet à vérifier, et elle peut être soit symétrique, soit asymétrique. Lorsqu'elle est symétrique, les deux entités partagent exactement la même information, en particulier une clé secrète. Lorsqu'elle est asymétrique une des deux entités possède une paire de clés dont l'une est secrète et l'autre est publique ; il n'y a pas de clé secrète partagée. Dans de nombreux systèmes, seule la cryptographie symétrique est mise en oeuvre avec des cartes prépayées, car la cryptographie asymétrique reste lente et coûteuse. Les premiers mécanismes d'authentification développés en cryptographie symétrique consistent à calculer une fois pour toutes un certificat, différent pour chaque carte, à le stocker dans la mémoire de la carte, à le lire à chaque transaction et à le vérifier en interrogeant une application du réseau supportant la transaction où sont stockés les certificats déjà attribués. Ces mécanismes assurent une protection insuffisante, d'une part parce que le certificat peut être espionné, reproduit et rejoué frauduleusement étant donné qu'il est toujours le même pour une carte donnée et, d'autre part parce que les cartes peuvent être clouées. Pour lutter contre les clones, les mécanismes d'authentification passifs de cartes sont remplacés par des mécanismes d'authentification actifs qui peuvent en outre assurer l'intégrité des données. Un premier de ces mécanismes fait l'objet de la demande FR 89 09734 (FR-A-2650097). Le procédé décrit consiste à déterminer une fonction non linéaire, cette fonction étant connue de l'application et implantée dans une puce électronique sous la forme d'un automate d'états. Lors d'une authentification, la puce électronique et l'application calculent un certificat qui est le résultat de la fonction appliquée à une liste d'arguments déterminée à chaque authentification ; la liste d'arguments pouvant comprendre un aléa, l'aléa étant une donnée déterminée par l'application à chaque authentification, une donnée contenue dans la puce électronique et une clé secrète connue de la puce électronique et de l'application. Lorsque le certificat calculé par la puce électronique est identique au certificat calculé par l'application, la puce électronique est jugée authentique et la transaction entre la puce électronique et l'application est autorisée. Un second mécanisme de protection des cartes par authentification active inconditionnellement sûre, basé sur l'utilisation pour un nombre limité d'authentifications d'une fonction linéaire assurant une protection contre le rejeu et une usure contrôlée de la clé secrète, fait l'objet de la demande (FR-A-2739994) FR 95 12144.

Toutefois, chacun des deux mécanismes précédemment cités possède des avantages et des inconvénients spécifiques. En ce qui concerne le premier mécanisme, qui repose sur l'hypothèse (non prouvable dans l'état actuel des connaissances) de la sécurité informatique de la fonction non linéaire utilisée, les très fortes contraintes imposées par les capacités de calculs réduites des puces à logique câblée n'autorisent pas une marge de sécurité aussi large que pour les algorithmes à clé secrète usuels et, de ce fait la divulgation de la spécification détaillée de la fonction non linéaire utilisée peut représenter un risque. En ce qui concerne le second mécanisme, il possède l'avantage de bénéficier d'une sécurité prouvable tant que le nombre d'authentifications n'excède pas un certain seuil, et il n'y a donc pas de risque lié à la divulgation de la fonction linéaire utilisée mais, par contre la nécessité de limiter strictement le nombre d'utilisations de la fonction d'authentification pour la durée de vie de la puce (ou dans le cas de cartes rechargeables, entre deux rechargements) inhérente à cette solution peut représenter une contrainte difficile à satisfaire pour certaines applications. En outre, des attaques portant non pas sur les puces à logique câblée mais, sur les modules de sécurité utilisés pour la vérification de ces puces et, selon lesquelles un fraudeur fournirait à des modules de vérification des réponses aléatoires jusqu'à ce qu'un nombre suffisant de bonnes réponses, obtenues par hasard, lui fournisse le secret associé à un numéro de carte de son choix, peuvent être plus difficiles à contrer dans le cas du second mécanisme.

### Résumé de l'invention

Aussi, le problème technique à résoudre par l'objet de la présente invention est de proposer un procédé cryptographique de protection contre la fraude d'une puce électronique qui comprend les étapes consistant :
- à déterminer une fonction non linéaire connue de l'application et implantée dans la puce électronique,
- à attribuer à la puce électronique une première clé secrète K, connue seulement de la puce électronique et de l'application, et gardée secrète dans la puce électronique,
- à chaque authentification de la puce électronique à générer par l'application un mot d'entrée R appelé aléa,
- à calculer un certificat S, par la puce électronique et l'application, le certificat étant le résultat de la fonction non linéaire appliquée à une liste d'arguments comprenant au moins l'aléa R et la clé secrète K,
et qui assure une sécurité accrue en conservant les avantages des mécanismes mentionnés précédemment tout en évitant tout ou partie de leurs inconvénients.

Une solution au problème technique posé consiste, selon la présente invention, en ce que ledit procédé comprend en outre les étapes consistant :
- à attribuer à la puce électronique une seconde clé secrète K' connue seulement de la puce électronique et de l'application, et gardée secrète dans la puce électronique,
- à chaque authentification de la puce électronique à déterminer un masque M calculé à partir d'au moins une partie de la clé secrète K',
- à masquer la valeur du certificat S au moyen du masque M pour rendre disponible à l'application uniquement la valeur du certificat masquée,
- à vérifier par l'application la valeur masquée du certificat calculée par la puce électronique.

Ainsi, le procédé selon l'invention, qui concerne la protection contre la fraude dans des transactions entre une puce électronique et une application, masque la valeur du certificat S calculée par la puce électronique, avant que l'application le lise pour en vérifier sa valeur et déterminer si la puce électronique est authentique ; le calcul du certificat S et la détermination du masque M faisant intervenir respectivement, une première clé et une seconde clé gardées secrètes dans la puce électronique et connues de l'application.

Le procédé conforme à l'invention résout le problème posé, d'une part car la valeur de certificat S est protégée par masquage et, par conséquent la sécurité de la méthode d'authentification active selon l'invention repose sur des hypothèses de sécurité beaucoup moins fortes que lorsque la valeur de certificat S n'est pas protégée par masquage et, d'autre part car l'utilisation d'une fonction non linéaire informatiquement sûre permet de prolonger la protection des secrets utilisés au-delà du seuil où la sécurité inconditionnelle de ces secrets est compromise.

L'application vérifie l'exactitude de la valeur masquée, soit en démasquant le certificat masqué calculé par la puce électronique au moyen de la fonction inverse du masque et en comparant la valeur démasquée à la valeur du certificat calculé par l'application, soit, après avoir calculé les valeurs du certificat S et du masque M, en masquant au moyen du masque M la valeur du certificat S et en comparant cette valeur masquée à celle calculée par la puce électronique. Lorsque les valeurs comparées sont identiques, la puce électronique est jugée authentique et la transaction entre la puce et l'application est autorisée.

De manière avantageuse, un mode particulier de mise en oeuvre permet d'assurer simultanément l'authentification de la carte et l'authentification de données en faisant intervenir la valeur de certaines données dans le calcul du certificat. Dans un premier cas, ces données peuvent être mémorisées dans la puce électronique et être constituées par le numéro de la puce ou par un crédit associé à la puce électronique. Dans un second cas, ces données sont écrites dans la puce par l'application lors de l'opération d'authentification.

Selon un mode particulier de mise en oeuvre, la détermination d'une clé peut être effectuée par l'application par une méthode de diversification avec pour arguments d'entrée le numéro de la puce électronique et un code secret maître, ce qui permet avantageusement à l'application de reconstituer les clés secrètes de chaque puce électronique après lecture du numéro de la puce ; aucun stockage des clés secrètes des puces n'est nécessaire.

L'attribution des clés à une puce électronique est effectuée, soit lors de la personnalisation de la puce en fin de fabrication, soit lors d'une opération de rechargement de la puce dans le cas d'une puce rechargeable. Bien qu'il soit préférable d'utiliser des clés K et K' indépendantes, il peut exister un lien de dépendance entre la première clé K et la seconde clé K' d'une puce électronique ; ce lien pouvant se présenter sous la forme d'une fonction qui permet de calculer la clé K' à partir de la clé K, ou la clé K' à partir de la clé K.

Dans un mode particulier de mise en oeuvre, la clé K' est un mot d'un nombre déterminé de bits regroupés en séquence ; chaque séquence ayant un nombre de bits égal au nombre de bits qui compose le masque M. Le masque M est déterminé par le choix, différent à chaque authentification, d'une de ces séquences. Le choix peut être effectué en pointant sur les séquences au moyen d'un pointeur positionné par la valeur d'un compteur implanté dans la puce ou positionné par la valeur d'un paramètre fourni par l'application lors de l'authentification. Dans un autre mode de mise en oeuvre, chaque bit constituant le masque M est égal à une combinaison linéaire modulo 2 de bits de la clé K' ; la combinaison étant calculée à chaque authentification, d'une part par l'application et d'autre part par la puce.

### Brève description des dessins

D'autres caractéristiques et avantages de l'invention apparaîtront lors de la description qui suit de modes particuliers de réalisation ; la description étant faite en regard de dessins annexés donnés à titre d'exemples non limitatifs.

La figure 1 est un schéma d'un procédé selon l'invention.

La figure 2 est un schéma d'une fonction non linéaire f.

### Description d'un mode de réalisation

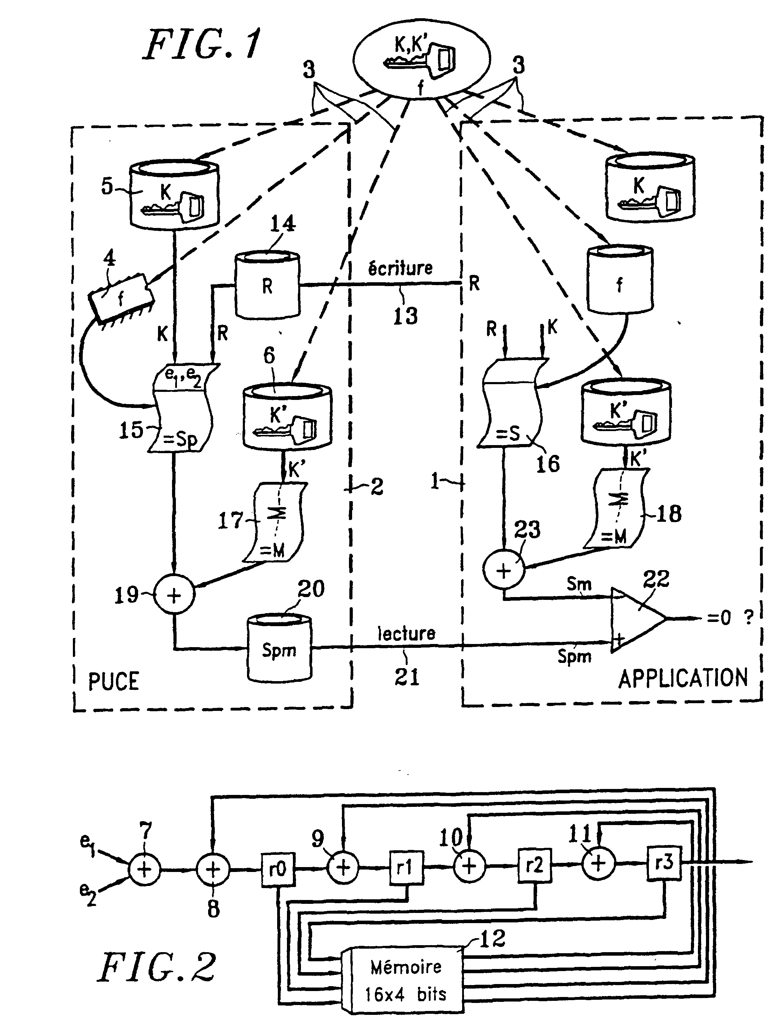

La figure 1 représente schématiquement un procédé cryptographique selon l'invention, de protection contre la fraude dans des transactions entre une application 1 et une puce électronique 2 d'un utilisateur.

L'application 1 peut être entièrement ou partiellement délocalisée dans un terminal en libre service non surveillé, tel un téléphone public ou tel un tourniquet d'accès à un transport public. L'utilisateur détient une puce électronique 2, implantée par exemple sur une carte prépayée, qui doit lui permettre d'établir une transaction avec l'application 1. Ces transactions peuvent consister en l'établissement de communications téléphoniques, le paiement d'objets dans un distributeur automatique, la location d'emplacements de stationnement à partir d'un parcmètre, le paiement d'un service comme un transport public ou comme la mise à disposition d'infrastructures.

Le procédé permet soit d'authentifier la puce électronique 2, soit d'authentifier l'application 1 ; le fraudeur falsifiant soit la puce électronique 2 au moyen d'un clone, soit l'application 1 au moyen d'un faux terminal.

La puce électronique 2 est personnalisée au moment de sa fabrication et, éventuellement lors d'une opération de rechargement, au moyen d'un numéro d'identité i et d'une valeur initiale d'une donnée D liée à l'application 1 à laquelle elle est destinée ; la valeur D représente généralement le crédit attaché à la puce électronique 2 pour une application 1 donnée.

Le procédé consiste, lors de cette opération de personnalisation ou, lors d'une opération préalable à la commercialisation de la puce électronique, à déterminer 3 les conditions initiales nécessaires à l'authentification, soit de la puce électronique 2, soit de l'application 1. Ces conditions initiales comprennent la détermination d'une fonction non linéaire f, d'une première clé secrète K et d'une seconde clé secrète K'. La fonction non linéaire f est connue de l'application 1 et elle est implantée dans la puce électronique 2 sous la forme de circuits électroniques 4 ou, dans le cas de puces électroniques dotées d'un microprocesseur, sous la forme d'un programme. La première clé K, respectivement la seconde clé K', est conservée secrètement dans une mémoire 5, respectivement 6, de la puce électronique 2.

La fonction non linéaire f peut être implantée sous la forme d'une succession de registres formant un registre à décalage, associés à une mémoire et à des opérateurs ou exclusifs ; une telle fonction est dite « automate d'états » et un exemple est représenté à la figure 2. Suivant cet exemple, la fonction f consiste en un premier opérateur ou exclusif 7, un registre à décalage 4 bits comprenant quatre bascules r0 à r3 et quatre opérateurs ou exclusifs 8 à 11 et, en une mémoire 12 de taille 16x4 bits. Chaque opérateur ou exclusif 7 à 11 a deux entrées et une sortie. Chaque bascule r0 à r3 a une entrée de données, deux sorties de données et une entrée horloge non représentée. La mémoire 12 a quatre entrées et quatre sorties et une entrée horloge non représentée. Les arguments d'entrée e₁,e₂ qui comprennent au moins la première clé secrète K et une seconde valeur R sont présents sur une des entrées du premier opérateur ou exclusif 7. La sortie du premier opérateur ou exclusif 7 est connectée à la première entrée du deuxième opérateur ou exclusif 8. L'entrée des bascules r0, r1, r2 et r3 est connectée à la sortie d'un opérateur ou exclusif 8 à 11. La première sortie des bascules r0, r1 et r2 est connectée à une première entrée d'un opérateur ou exclusif 9 à 11. La seconde sortie des bascules r0, r1, r2 et r3 est connectée à une entrée de la mémoire 12. La seconde entrée des opérateurs ou exclusifs 8 à 11 est connectée à une sortie de la mémoire 12. La première sortie de la bascule r3 donne la valeur du certificat S calculée par la fonction f appliquée aux arguments e₁, e₂ qui comprennent au moins la première clé secrète K et une seconde valeur R. A chaque authentification de la puce électronique 2 ou, de l'application 1, correspond un nombre de coups d'horloge égal au nombre de bits des arguments d'entrée e₁, e₂ ; les bits du résultat S sortent en série à chaque coup d'horloge.

La première clé K, généralement attribuée de manière individuelle à une puce électronique 2, consiste typiquement en un mot de 64 à 128 bits ; ce mot est connu de l'application 1 et est gardé 5 secret dans la puce électronique 2. Cependant, selon un mode particulier de réalisation du procédé, l'application 1 ne mémorise pas la clé K elle-même mais un secret dit maître. Ce secret maître est tel qu'il permet de reconstituer, par une méthode dite de diversification, la clé K à partir du numéro i d'identité de la puce électronique 2.

Quel que soit le mode de réalisation du procédé, la clé K est typiquement conservée dans la puce électronique 2 dans une mémoire morte telle une PROM 5. En particulier, lorsque la puce électronique 2 est de type rechargeable, c'est le cas d'une puce électronique 2 implantée sur une carte prépayée à rechargement, la mémoire morte 5 est aussi accessible en écriture, telle une EEPROM.

La seconde clé K' se présente comme la clé K, sous la forme d'un mot d'un certain nombre de bits. Les clés K et K' sont mémorisées dans la puce électronique 2, dans la même mémoire à des adresses différentes ou dans deux mémoires distinctes 5, 6, et, la détermination des bits de K', respectivement de K, peut dans certains cas dépendre de la clé K, respectivement K'.

Après l'opération de personnalisation, la puce électronique 2 est commercialisée et l'utilisateur peut entreprendre une transaction avec une application 1. Deux cas peuvent se présenter suivant que l'authentification consiste à authentifier la puce électronique 2 par l'application 1 ou, suivant que l'authentification consiste à authentifier l'application 1 par la puce électronique 2.

Le premier cas correspond au schéma de la figure 1. Dans ce cas, l'application 1 cherche à déterminer si la puce électronique 2 est authentique ou pas ; en effet, il peut s'agir du clone d'une puce électronique 2.

Dans une première étape du procédé, l'application 1 génère un mot R appelé aléa. Le mot R comprend un nombre de bits déterminé pour éviter toute tentative frauduleuse de rejeu ; typiquement le nombre de bits est de l'ordre de quelques dizaines de bits. Le mot R est généré à l'aide d'un générateur aléatoire ou d'un générateur pseudo-aléatoire. Dans un mode particulier de réalisation, les mots R successivement générés peuvent consister en une suite d'entiers consécutifs prédictibles. Le mot R est un argument d'entrée pour le calcul du certificat Sp, S effectué par la puce électronique 2 et par l'application 1. Pour que la puce électronique 2 ait accès au mot R, l'application 1 effectue une écriture 13 dans la puce électronique 2 ou la puce électronique 2 vient lire le mot R dans l'application 1. L'échange entre la puce électronique 2 et l'application 1 peut s'effectuer suivant un protocole établi lors de la personnalisation de la puce électronique 2 ; la valeur R peut, par exemple, être codée. Le mot R est stocké temporairement dans une mémoire 14 tampon de la puce électronique 2, ainsi que dans l'application 1.

Dans une deuxième étape du procédé, l'application 1 d'une part et, la puce électronique 2 d'autre part, calculent 15, 16 un certificat noté respectivement S et Sp. Le certificat S, respectivement Sp, est le résultat du calcul effectué par la fonction non linéaire f appliquée à une liste d'arguments e₁,e₂ qui comprend au moins l'aléa R et la clé K. Dans des modes particuliers de réalisation du procédé, la liste d'arguments e₁,e₂ comprend en outre, le numéro i d'identité de la puce ou, la valeur de la donnée D contenue dans la puce ou, la valeur d'une donnée D' générée par l'application et écrite dans la puce avant l'authentification ou, une combinaison des arguments précédents.

Dans une troisième étape, le procédé consiste à déterminer 17, 18 un masque M à partir d'au moins une partie de la clé K'. Le masque M consiste en un nombre déterminé m de bits qui est typiquement égal à une dizaine de bits. Le nombre de bits de M est de préférence le même que le nombre de bits du certificat S, pour masquer totalement le certificat S et ne révéler aucune information sur le certificat S. La détermination de M peut être effectuée de différentes manières. Dans un premier mode de réalisation, la détermination de M consiste à sélectionner m bits successifs de la clé K' et à décaler de m, après chaque authentification, le rang du premier bit sélectionné. Ainsi, lors de la première authentification, le masque M comprend les bits *b*₀,*b*₁,...,*b*_{*m*}₋₁ et lors de l'authentification suivante le masque M comprend les bits *b*_{*m*},*b*_{*m*}₊₁,...,*b*₂_{*m*}₋₁ avec *b*₀,*b*₁,...,*b*_{*n*}₋₁ les bits de la clé K'. Dans un deuxième mode de réalisation, la détermination de M consiste à effectuer une combinaison des bits de la clé K' ; par exemple, si *m*₀,*m*₁,...,*m*_{*m*}₋₁ sont les bits de M, si *b*₀,*b*₁,...,*b*_{*n*}₋₁ sont les ,bits de la clé K'et si l'aléa R peut être décomposé en m mots de n bits R₀ = r_{0,0}, r_{0,1},..,r_{0,n-1} ; R₁ = r_{1,0}, r_{1,1},..,r_{1,n-1}: Rₘ₋₁ = r_{m-1,0}, r_{m-1,1},..,r_{m-1,n-1}, alors : *m*_{*i*} = (*b*₀.*r*_{*i*}_{,0} + *b*₁.*r*_{*i*}_{,1} + ... + *b*_{*n*}₋₁.*r*_{*i*}_{,}_{*n*}₋₁)mod 2. Dans un troisième mode de réalisation qui généralise le premier mode de réalisation mentionné ci-dessus, la détermination de M consiste à déterminer un paramètre c et à sélectionner une séquence de bits de la clé K' en pointant les bits de K' au moyen de c. Ceci nécessite de considérer la clé K' comme une suite de séquences de bits. Ainsi, si *m*₀,*m*₂,...,*m*_{*m*}₋₁ sont les bits de M et si K' est une suite de séquences de m bits, K' peut se représenter sous la forme d'un tableau :

| | | | |
|---|---|---|---|
| b₀ | bₘ | ... | bₙ₋ₘ |
| ... | ... | ... | ... |
| bₘ₋₁ | b₂ₘ₋₁ | ... | bₙ₋₁ |

et le contenu d'une colonne peut être représentée par le mot de m bits K'[i], avec i=1 à n/m. Dans ces conditions, M est égal à K'[c] où c est un paramètre appartenant à l'intervalle [1, n/m]. Selon un premier mode de réalisation, la valeur du paramètre c est déterminée par la valeur d'un compteur, implanté dans la puce et incrémenté à chaque authentification de la puce, et, l'application accède à la valeur du compteur en effectuant une lecture dans la puce. Selon un second mode de réalisation, la valeur du paramètre c dépend simultanément de la valeur d'un compteur, implanté dans la puce et incrémenté à chaque authentification de la puce, et, par exemple, de l'aléa R. La valeur de c peut aussi dépendre de la valeur D ou de la valeur D' ou du numéro i d'identité de la puce.

Dans une quatrième étape du procédé, la puce électronique 2 masque 19 la valeur du certificat Sp qu'elle a calculée 17 au moyen du masque M. Dans un premier mode de réalisation, le masquage 19 est calculé au moyen d'une fonction de chiffrement. Une fonction de chiffrement est une fonction bijective paramétrée par une clé qui, à un ensemble de valeurs, fait correspondre un autre ensemble de valeurs ; par exemple la fonction F : x→ x + k modulo 2, avec x=0 ou 1 et k = 0 ou 1 peut être utilisée comme fonction de chiffrement. La fonction de chiffrement peut consister en une opération ou exclusif entre le certificat Sp et le masque M. Le résultat de l'opération de masquage donne la valeur du certificat masquée Spm qui est stockée de manière temporaire dans une mémoire 20 tampon de la puce électronique 2.

Dans une cinquième étape du procédé, l'application 1 effectue une lecture 21 de la mémoire 20 tampon, ou la puce électronique 2 vient écrire le certificat masqué Spm dans l'application 1. L'échange 21 entre la puce électronique 2 et l'application 1 peut s'effectuer suivant un protocole similaire à celui utilisé pour l'échange de l'aléa R. L'application 1 vérifie ensuite la valeur Spm du certificat masqué calculée par la puce électronique 2 en la comparant 22 à la valeur S du certificat qu'elle a elle-même calculée 16. Pour effectuer la comparaison 22, soit l'application 1 masque 23 la valeur S au moyen du masque M qu'elle 1 a préalablement calculé 18 pour obtenir une valeur masquée Sm et la comparer 22 à la valeur Spm comme représenté sur la figure 1, soit l'application démasque la valeur Spm en faisant intervenir une fonction inverse du masque pour obtenir la valeur Sp et la comparer à la valeur S.

Un mode particulier de réalisation du procédé limite le nombre d'authentifications pouvant être effectuées pour une même puce électronique. Cette limitation permet avantageusement de protéger les puces électroniques contre des attaques d'un fraudeur qui consistent à tirer parti de l'observation d'un nombre d'authentifications supérieur à ce qui est requis par l'application. Selon ce mode de réalisation, la puce comprend en mémoire un nombre V déterminé en fonction de l'application et égal au nombre maximum d'authentifications de la puce. Lorsqu'une opération d'authentification se présente, la transaction demandée est interdite si la puce a préalablement effectué un nombre V d'authentifications. Pour contrôler le nombre d'authentifications déjà effectuées, la puce contient typiquement un compteur incrémenté à chaque opération d'authentification. Lorsque le compteur atteint la valeur V, il déclenche un verrouillage interne de la puce pour lui interdire d'effectuer tout nouveau calcul de certificat. En l'absence de valeur de certificat calculée par la puce, la vérification de certificat effectuée par l'application échoue et par conséquent l'application interdit la transaction avec la puce.

Une variante du procédé précédemment décrit en regard des figures 1 et 2 permet avantageusement de remédier à certaines tentatives de piratage consistant à simuler vis à vis d'une puce le comportement d'une application, à l'aide d'une authentification de l'application par la puce. Selon cette variante, des opérations précédemment effectuées par l'application sont effectuées par la puce électronique et vice versa. Ainsi :
- à chaque authentification de l'application, le mot d'entrée R appelé aléa est généré par la puce électronique et non par l'application,
- le masque M est déterminé de part et d'autre à chaque authentification de l'application,
- l'application calcule un certificat et le masque au moyen du masque M pour rendre disponible à la puce électronique uniquement la valeur du certificat masquée,
- l'opération de comparaison des valeurs de certificat calculées d'une part par la puce et, d'autre part par l'application est effectuée par la puce électronique.

## Revendications

1. Procédé cryptographique de protection contre la fraude dans des transactions entre une application (1) et une puce électronique (2) d'un utilisateur comprenant les étapes consistant :
- à déterminer une fonction non linéaire f connue de l'application (1) et implantée dans la puce électronique (2),
- à attribuer à la puce électronique (2) une première clé secrète K, connue seulement de la puce électronique (2) et de l'application (1), et gardée secrète dans la puce électronique (2),
- à chaque authentification de la puce électronique (2) à générer un mot R d'entrée variable appelé aléa,
- à calculer (15) un certificat Sp par la puce électronique (2) et à calculer (16) un certificat S par l'application (1), chacun des certificates Sp, S étant le résultat de la fonction non linéaire f appliquée à une liste d'arguments (e₁,e₂) comprenant au moins l'aléa R et la clé secrète K, **caractérisé en ce que** ledit procédé comprend en outre les étapes consistant :
- à attribuer à la puce électronique (2) une seconde clé secrète K' connue seulement de la puce électronique (2) et de l'application (1), et gardée secrète (6) dans la puce électronique (2),
- à chaque authentification de la puce électronique (2) à déterminer (17, 18) un masque M calculé à partir d'au moins une partie de la clé secrète K',
- à masquer (19) la valeur du certificat Sp au moyen du masque M pour rendre disponible à l'application (1) uniquement la valeur du certificat masquée (Spm),
- à vérifier par l'application (1) la valeur masquée (Spm) du certificat calculée par la puce électronique (2).

2. Procédé selon la revendication 1, **caractérisé en ce que** la vérification par l'application (1) de la valeur masquée (Spm) du certificat calculée par la puce électronique (2) consiste :
- à démasquer au moyen du masque M la valeur masquée (Spm) du certificat calculée par la puce électronique (2) et,
- à comparer la valeur du certificat Sp calculée par la puce électronique (2) à celle du certificat S calculée par l'application (1).

3. Procédé selon la revendication 1, **caractérisé en ce que** la vérification par l'application (1) de la valeur masquée (Spm) du certificat calculée par la puce électronique (2) consiste :
- à masquer (23) au moyen du masque M la valeur du certificat S calculée par l'application (1) et,
- à comparer (22) la valeur masquée (Spm) du certificat calculée par la puce électronique (2) à la valeur masquée (Sm) du certificat calculée par l'application (1).

4. Procédé selon la revendication 1, **caractérisé en ce que** l'aléa R est déterminé par l'application (1) à partir d'un nombre aléatoire généré par l'application (1) et **en ce que** l'aléa R est transmis à la puce électronique (2) par l'application (1).

5. Procédé selon la revendication 1, **caractérisé en ce que** l'aléa R est déterminé à partir d'une suite d'entiers consécutifs générés par l'application (1) et par la puce électronique (2).

6. Procédé selon la revendication 1, **caractérisé en ce que** chacun des certificats Sp, S est le résultat de la fonction non linéaire f appliquée à une liste d'arguments (e₁,e₂) comprenant au moins l'aléa R, la clé secrète K et des données D internes à la puce électronique.

7. Procédé selon la revendication 1, **caractérisé en ce que** chacun des certificats Sp, S est le résultat de la fonction non linéaire appliquée à une liste d'arguments (e₁,e₂) comprenant au moins l'aléa R, la clé secrète K et des données D' fournies à la puce électronique (2) par l'application (1) lors de l'authentification.

8. Procédé selon la revendication 1, **caractérisé en ce que** les clés secrètes K et K' sont choisies indépendamment l'une de l'autre.

9. Procédé selon la revendication 1, **caractérisé en ce que** K' consiste en une séquence de valeurs K'[i] et que M est égal à une combinaison linéaire modulo 2 des bits des valeurs K'[i], combinaison dont les caractéristiques sont déterminées au moment de la procédure d'authentification.

10. Procédé selon la revendication 1, **caractérisé en ce que** K' consiste en une séquence de valeurs K'[i] et que M est égal à la valeur K'[c] prise parmi les valeurs K'[i] et déterminée par le choix d'un paramètre c effectué au moment de l'authentification.

11. Procédé selon la revendication 10, **caractérisé en ce que** la valeur du paramètre c est calculée à partir d'au moins la valeur d'un compteur contenu dans la puce électronique et incrémenté à chaque authentification.

12. Procédé selon la revendication 10, **caractérisé en ce que** la valeur du paramètre c est calculée à partir d'au moins la valeur d'un compteur contenu dans la puce électronique et incrémenté à chaque authentification et de l'aléa R.

13. Procédé selon la revendication 1, **caractérisé en ce que** le masquage de chacun des certificats Sp, S au moyen du masque M est calculé au moyen d'une fonction de chiffrement (F).

14. Procédé selon la revendications 13, **caractérisé en ce que** la fonction de chiffrement (F) est une opération OU Exclusif bit à bit.

15. Procédé selon la revendication 1, **caractérisé en ce que** chacun des certificats Sp, S et le masque M ont le même nombre de bits.

16. Procédé selon la revendication 1, **caractérisé en ce que** le nombre d'authentifications de la puce électronique (2) est limité à une valeur maximale V déterminée par l'application (1) et inscrite dans la puce électronique (2).

17. Procédé selon la revendication 16, **caractérisé en ce que** la puce électronique (2) contient un compteur incrémenté à chaque authentification, et que la puce électronique (2) cesse tout calcul d'authentification lorsque la valeur du compteur atteint la valeur maximale V.

18. Procédé cryptographique de protection contre la fraude dans des transactions entre une application (1) et une puce électronique (2) d'un utilisateur comprenant les étapes consistant :
- à déterminer une fonction non linéaire f connue de l'application (1) et implantée dans la puce électronique (2),
- à attribuer à la puce électronique (2) une première clé secrète K, connue seulement de la puce électronique (2) et de l'application (1), et gardée secrète dans la puce électronique,
- à chaque authentification de l'application (1) à générer un mot d'entrée R appelé aléa,
- à calculer un certificat Sp par la puce électronique (2) et à calculer un certificat S par l'application (1), chacun des certificats Sp, S étant le résultat de la fonction non linéaire f appliquée à une liste d'arguments (e₁,e₂) comprenant au moins l'aléa R et la clé secrète K, **caractérisé en ce que** ledit procédé comprend en outre les étapes consistant :
- à attribuer à la puce électronique (2) une seconde clé secrète K', connue seulement de la puce électronique (2) et de l'application (1), et gardée secrète (6) dans la puce électronique (2),
- à chaque authentification de l'application (1) à déterminer un masque M calculé à partir d'au moins une partie de la clé secrète K',
- à masquer la valeur du certificat (S) au moyen du masque M pour rendre disponible à la puce électronique (2) uniquement la valeur du certificat S masquée (Sm),
- à vérifier par la puce électronique (2) la valeur masquée (Sm) du certificat S calculée par l'application (1).

19. Procédé selon la revendication 18, **caractérisé en ce que** l'aléa R est déterminé par la puce électronique (2) à partir d'un nombre aléatoire généré par la puce électronique (2) et **en ce que** l'aléa R est transmis à l'application (1) par la puce électronique (2).

20. Procédé selon la revendication 18, **caractérisé en ce que** l'aléa R est déterminé à partir d'une suite d'entiers consécutifs générés par l'application (1) et par la puce électronique (2).

## Patentansprüche

1. Kryptographisches Schutzverfahren gegen Missbrauch bei Transaktionen zwischen einer Anwendung (1) und einem elektronischen Chip (2) eines Nutzers mit den folgenden Stufen:
- Bestimmung einer der Anwendung (1) bekannten, nicht linearen und im elektronischen Chip (2) integrierten Funktion f,
- Zuordnung eines ersten, nur dem elektronischen Chip (2) und der Anwendung (1) bekannten und im elektronischen Chip (2) geheim gehaltenen geheimen Schlüssels K zum elektronischen Chip (2),
- Erzeugung eines Zufallswert genannten variablen Eingangswortes R bei jeder Authentifizierung des elektronischen Chips (2),
- Berechnung (15) eines Zertifikats Sp durch den elektronischen Chip (2) und Berechnung (16) eines Zertifikats S durch die Anwendung (1), wobei jedes Zertifikat Sp, S das Ergebnis der nicht linearen, auf eine Liste von Argumenten (e₁, e₂) mit wenigstens dem Zufallswert R und dem geheimen Schlüssel K angewendeten Funktion f ist, **dadurch gekennzeichnet, dass** das genannte Verfahren darüber hinaus die folgenden Stufen umfasst:
- Zuordnung eines nur dem elektronischen Chip (2) und der Anwendung (1) bekannten und im elektronischen Chip (2) geheim gehaltenen (6) zweiten geheimen Schlüssels K' zum elektronischen Chip (2),
- Bestimmung (17, 18) einer ausgehend von wenigstens einem Teil des geheimen Schlüssels K' berechneten Maske M bei jeder Authentifizierung des elektronischen Chips (2),
- Abdecken (19) des Wertes des Zertifikats Sp mittels der Maske M, um der Anwendung (1) nur den Wert des abgedeckten Zertifikats (Spm) verfügbar zumachen,
- Überprüfung des abgedeckten Wertes (Spm) des vom elektronischen Chip (2) berechneten Zertifikats durch die Anwendung (1).

2. Verfahren gemäß Anspruch 1, **dadurch gekennzeichnet, dass** die Überprüfung des abgedeckten, durch den elektronischen Chip (2) berechneten Wertes (Spm) des Zertifikats durch die Anwendung (1) aus Folgendem besteht:
- Aufdecken des abgedeckten Wertes (Spm) des vom elektronischen Chip (2) berechneten Zertifikats mittels der Maske M und,
- Vergleichen des durch den elektronischen Chip (2) berechneten Wertes des Zertifikats Sp mit dem von der Anwendung (1) berechneten Wert des Zertifikats S.

3. Verfahren gemäß Anspruch 1, **dadurch gekennzeichnet, dass** die Überprüfung durch die Anwendung (1) des abgedeckten, durch den elektronischen Chip (2) berechneten Wertes (Spm) des Zertifikats aus Folgendem besteht:
- Abdecken (23) des von der Anwendung (1) berechneten Wertes des Zertifikats S mittels der Maske M und
- Vergleichen (22) des vom elektronischen Chip (2) berechneten abgedeckten Wertes (Spm) des Zertifikats mit dem von der Anwendung (1) berechneten abgedeckten Wert (Sm) des Zertifikats.

4. Verfahren gemäß Anspruch 1, **dadurch gekennzeichnet, dass** der Zufallswert R durch die Anwendung (1) ausgehend von einer durch die Anwendung (1) erzeugten zufälligen Zahl bestimmt wird und dass der Zufallswert R durch die Anwendung (1) auf den elektronischen Chip (2) übertragen wird.

5. Verfahren gemäß Anspruch 1, **dadurch gekennzeichnet, dass** der Zufallswert R ausgehend von einer Folge von der Anwendung (1) und dem elektronischen Chip (2) erzeugter fortlaufender ganzer Zahlen bestimmt wird.

6. Verfahren gemäß Anspruch 1, **dadurch gekennzeichnet, dass** jedes der Zertifikate Sp, S das Ergebnis der nicht linearen, auf eine Liste von Argumenten (e₁, e₂) mit wenigstens dem Zufallswert R, dem geheimen Schlüssel K und den internen Daten D des elektronischen Chips angewendeten Funktion f ist.

7. Verfahren gemäß Anspruch 1, **dadurch gekennzeichnet, dass** jedes der Zertifikate Sp, S das Ergebnis der nicht linearen, auf eine Liste von Argumenten (e₁, e₂) mit wenigstens dem Zufallswert R, dem geheimen Schlüssel K und den dem elektronischen Chip (2) durch die Anwendung (1) bei der Authentifizierung gelieferten Daten D' angewendeten Funktion ist.

8. Verfahren gemäß Anspruch 1, **dadurch gekennzeichnet, dass** die geheimen Schlüssel K und K' unabhängig voneinander gewählt werden.

9. Verfahren gemäß Anspruch 1, **dadurch gekennzeichnet, dass** K' aus einer Wertesequenz K'[i] besteht und dass M gleich einer linearen Verbindung modulo 2 der Bits der Werte K'[i] ist, deren Merkmale zum Zeitpunkt des Authentifizierungsverfahrens bestimmt werden.

10. Verfahren gemäß Anspruch 1, **dadurch gekennzeichnet, dass** K' aus einer Wertesequenz K'[i] besteht und dass M gleich dem aus den Werten K'[i] ausgewählten und durch die Wahl eines zum Zeitpunkt der Authentifizierung durchgeführten Parameters c bestimmten Wert K'[c] ist.

11. Verfahren gemäß Anspruch 10, **dadurch gekennzeichnet, dass** der Wert des Parameters c .ausgehend von wenigsten dem Wert eines im elektronischen Chip enthaltenen und bei jeder Authentifizierung inkrementierten Zählers berechnet wird.

12. Verfahren gemäß Anspruch 10, **dadurch gekennzeichnet, dass** der Wert des Parameters c ausgehend von wenigstens dem Wert eines im elektronischen Chip enthaltenen und bei jeder Authentifizierung inkrementierten Zählers und des Zufallswertes R berechnet wird.

13. Verfahren gemäß Anspruch 1, **dadurch gekennzeichnet, dass** das Abdecken jedes Zertifikats Sp, S mittels der Maske M mittels einer Chiffrierungsfunktion (F) berechnet wird.

14. Verfahren gemäß Anspruch 13, **dadurch gekennzeichnet, dass** die Chiffrierungsfunktion (F) eine Exklusive ODER-Operation von Bit zu Bit ist.

15. Verfahren gemäß Anspruch 1, **dadurch gekennzeichnet, dass** jedes Zertifikat Sp, S und die Maske M dieselbe Bit-Zahl haben.

16. Verfahren gemäß Anspruch 1, **dadurch gekennzeichnet, dass** die Anzahl der Authentifizierungen des elektronischen Chips (2) auf einen durch die Anwendung (1) bestimmten und in den elektronischen Chip (2) eingeschriebenen maximalen Wert V begrenzt ist.

17. Verfahren gemäß Anspruch 16, **dadurch gekennzeichnet, dass** der elektronische Chip (2) einen bei jeder Authentifizierung inkrementierten Zähler enthält und dass der elektronische Chip (2) jegliche Authentifizierungsberechnung beendet, wenn der Wert des Zählers den maximalen Wert V erreicht.

18. Kryptographisches Schutzverfahren gegen Missbrauch bei Transaktionen zwischen einer Anwendung (1) und einem elektronischen Chip (2) eines Nutzers mit den folgenden Stufen:
- Bestimmung einer der Anwendung (1) bekannten, nicht linearen und im elektronischen Chip (2) integrierten Funktion f,
- Zuordnung eines ersten, nur dem elektronischen Chip (2) und der Anwendung (1) bekannten und im elektronischen Chip geheim gehaltenen geheimen Schlüssels K zum elektronischen Chip (2),
- Erzeugung eines Zufallswert genannten variablen Eingangswortes R bei jeder Authentifizierung der Anwendung (1),
- Berechnung eines Zertifikats Sp durch den elektronischen Chip (2) und Berechnung eines Zertifikats S durch die Anwendung (1), wobei jedes Zertifikat Sp, S das Ergebnis der nicht linearen, auf eine Liste von Argumenten (e₁, e₂) mit wenigstens dem Zufallswert R und dem geheimen Schlüssel K angewendeten Funktion f ist, **dadurch gekennzeichnet, dass** das genannte Verfahren darüber hinaus die folgenden Stufen umfasst:
- Zuordnung eines nur dem elektronischen Chip (2) und der Anwendung (1) bekannten und im elektronischen Chip (2) geheim gehaltene (6) zweiten geheimen Schlüssels K' zum elektronischen Chip (2),
- Bestimmung einer ausgehend von wenigstens einem Teil des geheimen Schlüssels K' berechneten Maske M bei jeder Authentifizierung der Anwendung (1),
- Abdecken des Wertes des Zertifikats (S) mittels der Maske M, um dem elektronischen Chip (2) nur den Wert des abgedeckten (Sm) Zertifikats S verfügbar zumachen,
- Überprüfung des abgedeckten Wertes Sm des von der Anwendung (1) berechneten Zertifikats S durch den elektronischen Chip (2).

19. Verfahren gemäß Anspruch 18, **dadurch gekennzeichnet, dass** der Zufallswert R ausgehend von einer durch den elektronischen Chip (2) erzeugten zufälligen Zahl durch den elektronischen Chip (2) bestimmt wird und dass der Zufallswert R durch den elektronischen Chip (2) auf die Anwendung (1) übertragen wird.

20. Verfahren gemäß Anspruch 18, **dadurch gekennzeichnet, dass** der Zufallswert R ausgehend von einer Folge von durch die Anwendung (1) und den elektronischen Chip (2) erzeugter fortlaufender ganzer Zahlen bestimmt wird.

## Claims

1. A cryptographic method of providing protection against fraud in transactions between an application (1) and an electronic chip (2) of a user, the method comprising the following steps:
- determining a non-linear function f known to the application (1) and implanted in the electronic chip (2),
- allocating to the electronic chip (2) a first secret key K known only to the electronic chip (2) and to the application (1) and kept secret in the electronic chip (2),
- on each authentication of the electronic chip (2), generating a variable input word R referred to as a random seed, and
- computing (15) by the electronic chip (2) a certificate Sp and computing (16) by the application (1) a certificate S, each of the certificate Sp, S is the result of applying the non-linear function f to a list of arguments (e₁, e₂) comprising at least the seed R and the secret key K,
which method is **characterized in that** it further comprises the following steps:
- allocating to the electronic chip (2) a second secret key K' known only to the electronic chip (2) and to the application (1) and kept secret (6) in the electronic chip (2),
- on each authentication of the electronic chip (2), determining (17, 18) a mask M computed from at least a portion of the secret key K',
- masking (19) the value of the certificate Sp by means of the mask M to make available to the application (1) only the masked value of the certificate (Spm), and
- using the application (1) to verify the masked value of the certificate (Spm) computed by the electronic chip (2).

2. A method according to claim 1, **characterized in that** verification by the application (1) of the masked value of the certificate (Spm) computed by the electronic chip (2) consists in:
- using the mask M to unmask the masked value of the certificate (Spm) computed by the electronic chip (2), and
- comparing the value of the certificate Sp computed by the electronic chip (2) with the value of the certificate S computed by the application (1).

3. A method according to claim 1, **characterized in that** verification by the application (1) of the masked value of the certificate (Spm) computed by the electronic chip (2) consists in:
- using the mask M to mask (23) the value of the certificate S computed by the application (1), and
- comparing (22) the masked value of the certificate (Sp) computed by the electronic chip (2) with the masked value of the certificate (Sm) computed by the application (1) .

4. A method according to claim 1, **characterized in that** the seed R is determined by the application (1) from a random number generated by the application (1) and **in that** the seed R is transmitted to the electronic chip (2) by the application (1).

5. A method according to claim 1, **characterized in that** the seed R is determined from a series of consecutive integers generated by the application (1) and by the electronic chip (2).

6. A method according to claim 1, **characterized in that** each of the certificate Sp, S is the result of applying the non-linear function f to a list of arguments (e₁, e₂) comprising at least the seed R, the secret key K, and data D internal to the electronic chip.

7. A method according to claim 1, **characterized in that** each of the certificate Sp, S is the result of applying the non-linear function to a list of arguments (e₁, e₂) comprising at least the seed R, the secret key K, and data D' supplied to the electronic chip (2) by the application (1) at the time of authentication.

8. A method according to claim 1, **characterized in that** the secret keys K and K' are chosen independently of each other.

9. A method according to claim 1, **characterized in that** K' consists of a sequence of values K'[i], M is equal to a linear combination modulo 2 of the bits of the values K'[i], and the characteristics of the combination are determined at the time of authentication.

10. A method according to claim 1, **characterized in that** K' consists of a sequence of values K'[i] and M is equal to values K'[c] from among the values K'[i] and determined by the choice of a parameter c at the time of authentication.

11. A method according to claim 10, **characterized in that** the value of the parameter c is computed from at least the value of a counter in the electronic chip which is incremented on each authentication.

12. A method according to claim 10, **characterized in that** the value of the parameter c is computed from at least the seed R and the value of a counter in the electronic chip which is incremented on each authentication.

13. A method according to claim 1, **characterized in that** the masking of each of the certificate Sp, S by means of the mask M is computed by means of an encryption function (F).

14. A method according to claim 13, **characterized in that** the encryption function (F) is an exclusive-OR operation applied bit by bit.

15. A method according to claim 1, **characterized in that** each of the certificate Sp, S and the mask M have the same number of bits.

16. A method according to claim 1, **characterized in that** the number of authentications of the electronic chip (2) is limited to a maximum value V determined by the application (1) and written into the electronic chip (2).

17. A method according to claim 16, **characterized in that** the electronic chip (2) contains a counter which is incremented on each authentication and the electronic chip (2) terminates all authentication computation if the value of the counter reaches the maximum value V.

18. A cryptographic method of providing protection against fraud in transactions between an application (1) and an electronic chip (2) of an user, the method comprising the following steps:
- determining a non-linear function f known to the application (1) and implanted in the electronic chip (2),
- allocating to the electronic chip (2) a first secret key K known only to the electronic chip (2) and to the application (1) and kept secret in the electronic chip,
- on each authentication of the application (1), generating an input word R referred to as a random seed, and
- computing by the electronic chip (2) a certificate Sp and computing by the application (1) a certificate S, each of the certificate Sp, S is the result of applying the non-linear function f to a list of arguments (e₁, e₂) comprising at least the seed R and the secret key K,
which method is **characterized in that** it further comprises the following steps:
- allocating to the electronic chip (2) a second secret key K' known only to the electronic chip (2) and to the application (1) and kept secret (6) in the electronic chip (2),
- on each authentication of the application (1), determining a mask M computed from at least a portion of the secret key K',
- masking the value of the certificate (S) by means of the mask M to make available to the electronic chip (2) only the masked value (Sm) of the certificate S, and
- using the electronic chip (2) to verify the masked value (Sm) of the certificate S computed by the application (1).

19. A method according to claim 18, **characterized in that** the seed R is determined by the electronic chip (2) from a random number generated by the electronic chip (2) and **in that** the seed R is transmitted to the application (1) by the electronic chip (2).

20. A method according to claim 18, **characterized in that** the seed R is determined from a series of consecutive integers generated by the application (1) and by the electronic chip (2).
